# EUROPEAN PATENT SPECIFICATION

(11) **EP 2 809 890 B1**
(45) Date of publication and mention of the grant of the patent: **05.08.2020**
(21) Application number: 13744407.1
(22) Date of filing: 22.01.2013
(51) Int. Cl.: F01D 25/16, F02C 7/06, F02K 3/068

(54) **GAS TURBINE ENGINE BEARING ARRANGEMENT**
LAGERANORDNUNG FÜR EINEN GASTURBINENMOTOR
AGENCEMENT DE PALIERS POUR MOTEUR À TURBINE À GAZ

(30) Priority: 31.01.2012 US 201261593010 P; 02.02.2012 US 201213364537
(43) Date of publication of application: 10.12.2014
(73) Proprietor: United Technologies Corporation, Farmington, CT 06032 (US)
(72) Inventor: MULDOON, Marc J., Marlborough, Connecticut 06447 (US); SHERIDAN, William G., Southington, Connecticut 06489 (US); REINHARDT, Gregory E., South Glastonbury, Connecticut 06073 (US); SAVELA, Gregory M., Amston, Connecticut 06231 (US)
(74) Representative: Dehns
(86) International application number: PCT/US2013/022456
(87) International publication number: WO 2013/116033

(56) References cited:
- EP-A2- 1 396 611
- US-A- 3 722 212
- US-A- 3 823 553
- US-A- 4 854 126
- US-A1- 2009 148 271
- US-A1- 2011 120 079
- US-A1- 2012 017 603

## Description

### BACKGROUND

This disclosure relates to a bearing arrangement for a gas turbine engine.

A typical jet engine has two or three spools, or shafts, that transmit torque between the turbine section and the compressor section of the engine. Each of these spools is typically supported by two bearings. One bearing, for example, a ball bearing, is arranged at a forward end of the spool and is configured to react to both axial and radial loads. Another bearing, for example, a roller bearing or journal bearing is arranged at the aft end of the spool and is configured to react only to radial loads. This bearing arrangement fully constrains the shaft except for rotation, and axial movement of one free end is permitted to accommodate engine axial growth.

US 2012/017603 discloses a prior art gas turbine engine having the features of the preamble to claim 1. EP 1 396 611 A2 and US 3,823,553 disclose other gas turbine engines.

### SUMMARY

From one aspect, the present invention provides a gas turbine engine in accordance with claim 1.

In a further embodiment of any of the above, the housing is rotationally fixed, the first and second bearings each have first and second radial sides, the first radial side is supported by the housing, and the second radial side supports the aft end.

In a further embodiment of any of the above, a bearing compartment is included, and the first and second bearings are arranged in the bearing compartment.

In a further embodiment of any of the above, the bearing compartment includes a cover removably secured over the aft end and enclosing the first and second bearings.

In a further embodiment of any of the above, the gas turbine engine includes a fan, and a compressor section fluidly connected to the fan. The compressor section includes a high pressure compressor portion and a low pressure compressor portion. A combustor is fluidly connected to the compressor section, and a turbine section is fluidly connected to the combustor. The turbine section includes the high pressure turbine section coupled to the high pressure compressor portion via the second spool and the low pressure turbine section. The second housing portion being a turbine exhaust case.

In a further embodiment of any of the above, the gas turbine engine is a high bypass geared aircraft engine having a bypass ratio of greater than about six (6).

In a further embodiment of any of the above, the gas turbine engine includes a low Fan Pressure Ratio of less than about 1.45.

In a further embodiment of any of the above, the low pressure turbine portion has a pressure ratio that is greater than about 5.

From another aspect, the present invention provides a method of assembling the gas turbine engine of any of the above embodiments and includes arranging the first spool within the second spool. The first and second bearings being mounted between the aft end of the first spool and the fixed housing.

In a further embodiment of any of the above, the mounting step includes arranging the first and second bearings aft of the low pressure turbine section mounted on the first spool.

In a further embodiment of any of the above, the mounting step includes arranging the first and second bearings in a common bearing compartment.

In a further embodiment of any of the above, the gas turbine engine is a high bypass geared aircraft engine having a bypass ratio of greater than about six (6), and the gas turbine engine includes a low Fan Pressure Ratio of less than about 1.45.

### BRIEF DESCRIPTION OF THE DRAWINGS

The disclosure can be further understood by reference to the following detailed description when considered in connection with the accompanying drawings.
Figure 1 is a schematic view of an example gas turbine engine bearing arrangement in accordance with the claimed invention.
Figure 2 is a schematic view of another example gas turbine engine bearing arrangement outside the scope of the claimed invention.
Figure 3 is a schematic view of still another example gas turbine engine bearing arrangement outside the scope of the claimed invention.
Figure 4 is a more detailed schematic view of the bearing arrangement illustrated in Figure 1.
Figure 5 is a schematic view of an example bearing used to support a first spool.

### DETAILED DESCRIPTION

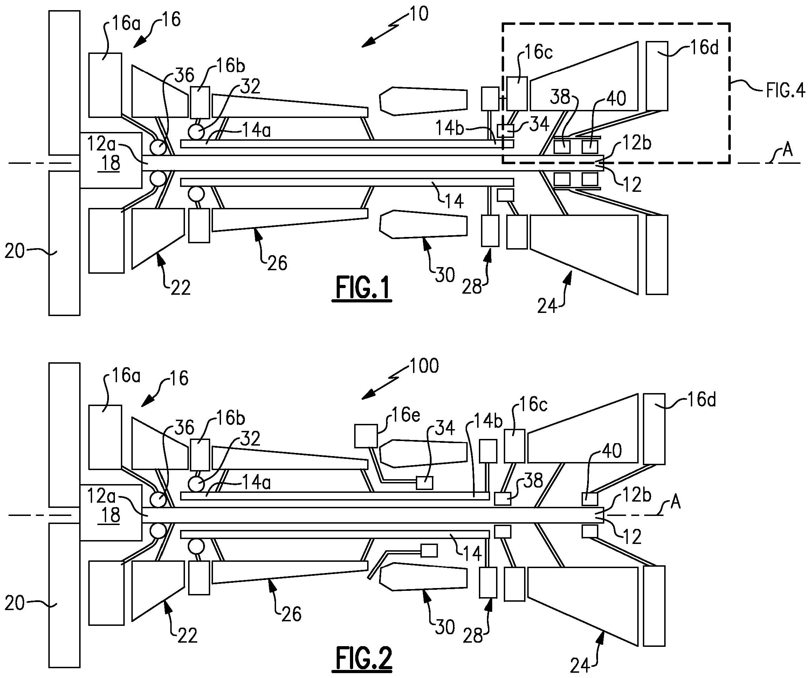

Figures 1-3 schematically illustrate gas turbine engines 10, 100, 200. The gas turbine engines are each disclosed herein as a two-spool turbofan that generally incorporate a fan section, a compressor section, a combustor section and a turbine section. Alternative engines might include an augmentor section (not shown) among other systems or features. The fan section drives air along a bypass flowpath while the compressor section drives air along a core flowpath for compression and communication into the combustor section then expansion through the turbine section. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 10 generally includes a low speed spool and a high speed spool mounted for rotation about an engine central longitudinal axis A relative to an engine static structure via several bearing systems. It should be understood that various bearing systems at various locations may alternatively or additionally be provided.

The low speed spool generally includes an inner shaft that interconnects a fan, a low pressure compressor portion and a low pressure turbine portion. The inner shaft is connected to the fan through a geared architecture to drive the fan at a lower speed than the low speed spool. The high speed spool includes an outer shaft that interconnects a high pressure compressor portion and high pressure turbine portion. A combustor is arranged between the high pressure compressor portion and the high pressure turbine portion. A mid-turbine frame of the engine static structure is arranged generally between the high pressure turbine portion and the low pressure turbine portion. The mid-turbine frame supports one or more bearing systems in the turbine section. The inner shaft and the outer shaft are concentric and rotate via bearing systems about the engine central longitudinal axis A which is collinear with their longitudinal axes.

The core airflow is compressed by the low pressure compressor portion then the high pressure compressor portion, mixed and burned with fuel in the combustor, then expanded over the high pressure turbine portion and low pressure turbine portion. The mid-turbine frame includes airfoils which are in the core airflow path. The turbines rotationally drive the respective low speed spool and high speed spool in response to the expansion.

The engine 10 in one example a high-bypass geared aircraft engine. In a further example, the engine 10 bypass ratio is greater than about six (6), with an example embodiment being greater than ten (10), the geared architecture is an epicyclic gear train, such as a planetary gear system or other gear system, with a gear reduction ratio of greater than about 2.3 and the low pressure turbine portion has a pressure ratio that is greater than about 5. In one disclosed embodiment, the engine 10 bypass ratio is greater than about ten (10:1), the fan diameter is significantly larger than that of the low pressure compressor portion, and the low pressure turbine portion has a pressure ratio that is greater than about 5:1. Low pressure turbine pressure ratio is pressure measured prior to inlet of low pressure turbine portion as related to the pressure at the outlet of the low pressure turbine portion prior to an exhaust nozzle. The geared architecture may be an epicycle gear train, such as a planetary gear system or other gear system, with a gear reduction ratio of greater than about 2.5:1. It should be understood, however, that the above parameters are only exemplary of one embodiment of a geared architecture engine and that the present invention is applicable to other gas turbine engines including direct drive turbofans.

A significant amount of thrust is provided by the bypass flow due to the high bypass ratio. The fan section of the engine 10 is designed for a particular flight condition -- typically cruise at about 0.8 Mach and about 35,000 feet (10.7 km). The flight condition of 0.8 Mach and 35,000 ft (10.7 km), with the engine at its best fuel consumption - also known as bucket cruise Thrust Specific Fuel Consumption ("TSFC"). TSFC is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tambient deg R) / 518.7)^0.5]. The "Low corrected fan tip speed" as disclosed herein according to one non-limiting embodiment is less than about 1150 ft / second (351 m/s).

One example gas turbine engine 10 is schematically depicted in Figure 1. The engine 10 includes first and second spools 12, 14, which correspond to low and high spools in the example. It should be understood, however, that more than two spools may be used. The first and second spools 12, 14 are rotatable about a common axis A and supported within a housing 16. The first spool 12 extends axially between forward and aft ends 12a, 12b, and the second spool 14 extends between forward and aft ends 14a, 14b. The first spool 12 is arranged within the second spool 14, and the aft end 12b extends axially beyond the second spool 14.

The housing 16, which is rotationally fixed, includes multiple housing portions 16a, 16b, 16c, 16d (and 16E in Fig. 2). In the example, the first, second, third and fourth housing portions 16a, 16b, 16c, 16d respectively correspond to an inlet case, a compressor case, a turbine case and a turbine exhaust case. Each of these housing portions typically includes one or more housing components secured to one another to facilitate assembly and disassembly of the engine 10.

One example engine 10 includes a fan section 20 driven by the first spool 12 through a gear train 18. A low pressure compressor section 22 and a low pressure turbine section 24 are mounted on the first spool 12. A high pressure compressor section 26 and a high pressure turbine section 28 are mounted on the second spool 14. A combustor section 30 is arranged between the high pressure compressor section 26 and the high pressure turbine section 28. The turbine case (16c) is arranged axially between the combustor section 30 and the high pressure turbine section 28, and the turbine exhaust case (16d) is arranged axially between the high and low pressure turbine sections 28, 24.

The housing 16 supports the second spool 14 for rotation with first and second bearings 32, 34. In one example, the first bearing 32 is of a type that may react to both axial and radial loads, such as a ball bearing. The second bearing 34 is of a type that reacts to radial loads, such as a roller bearing or a journal bearing.

The first spool 12 is supported by first, second and third bearings 36, 38, 40. The first bearing 36 is of a type that reacts to both axial and radial loads. The second and third bearings 38, 40 are of a type that reacts to radial loads. The second and third bearings 38, 40 support the aft end 12b of the first spool 12.

The low spool 12 has a higher length/diameter (L/D) ratio than the high spool 14. From a rotor dynamics standpoint, a shaft will reach a critical speed of instability at a lower speed as the L/D ratio gets larger. Providing at least two bearings at the aft end 12b of the low spool 12 increases the critical speed of the low spool 12, which enables higher overall engine speeds and lower weight thereby allowing the engine 10 to be faster and smaller for a given level of thrust.

As illustrated in Figure 1, the second and third bearings 38, 40 provide a tandem arrangement supported by the fourth housing portion 16d or turbine engine case.

Another example engine 100 is schematically depicted in Figure 2. The second bearing 34 is supported by a fifth housing portion 16e and arranged axially between the high pressure compressor section 26 and the high pressure turbine section 28, for example, radially inwardly of the combustor section 30. The second bearing 38 is supported by the third housing portion 16c and arranged axially between the high pressure turbine section 28 and the low pressure turbine section 24. The third bearing 40 is supported by the fourth housing portion 16d and arranged axially aft of the low pressure turbine section 24.

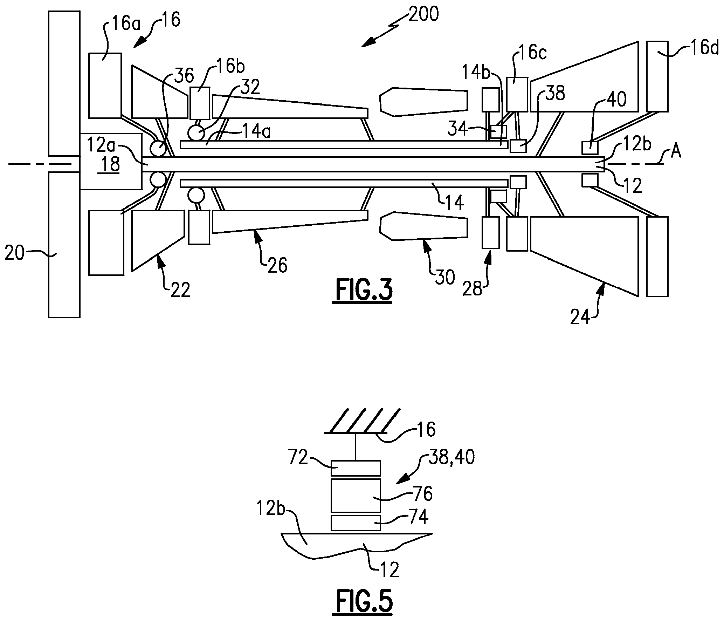

Another example engine 200 is schematically depicted in Figure 3. Similar to the arrangement illustrated in Figure 1, the second bearing 34 is arranged axially between the high pressure turbine section 28 and the low pressure turbine section 24. The second bearing 38 is also arranged axially between the high pressure turbine section 28 and the low pressure turbine section 24. In this manner, the second bearings 34, 38 may be arranged in a common bearing compartment. The third bearing 40 is arranged axially aft of the low pressure turbine section 24 and supported by the fourth housing portion 16d.

Referring to Figure 5, the fixed housing 16 supports a first radial side 72 of the second and third bearings 38, 40. A second radial side 74 supports the aft end 12b of the first spool 12. In the example of a roller bearing, rolling elements 76 are provided between the first and second radial sides 72, 74.

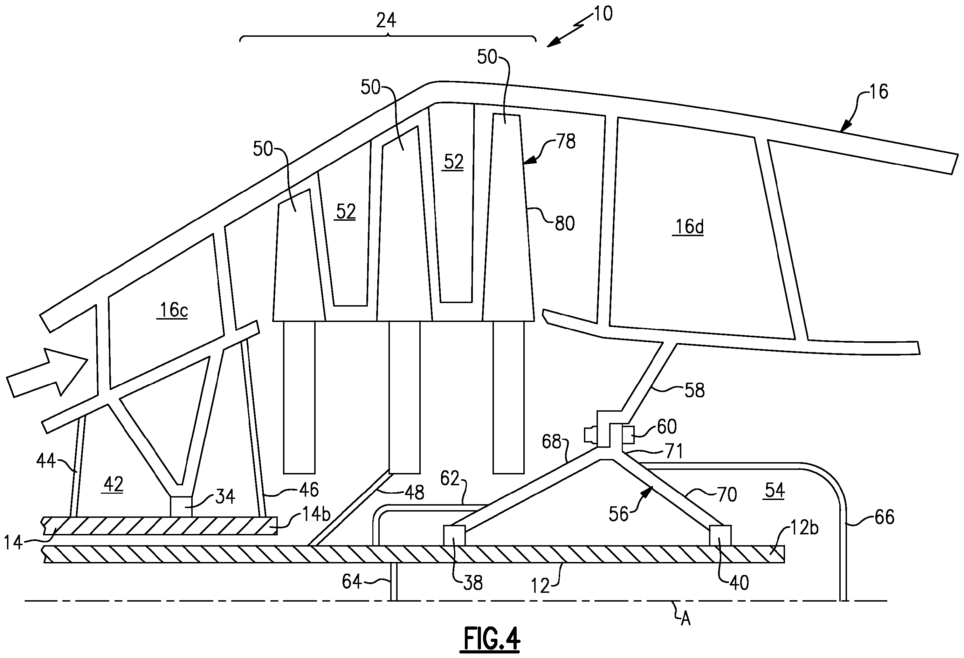

Figure 4 illustrates a more detailed view of the engine 10 shown in Figure 1. The second bearing 34 supporting the second spool 14 is arranged within a first bearing compartment 42. The first bearing compartment 42 is provided by first and second walls 44, 46, which are sealed relative to the third housing portion 16c and the second spool 14.

The low pressure turbine section 24 includes a low pressure turbine rotor hub 48 secured to the first spool 12. The low pressure turbine rotor hub 48 supports multiple low pressure turbine blades 50 in one example. Low pressure turbine stator vanes 52 are provided between the low pressure turbine blades 50 and supported by the housing 16. The low pressure turbine rotor hub 48 is canted in an aft direction, which accommodates a second bearing compartment 54. The second and third bearings 38, 40 are arranged within the second bearing compartment 54, which is provided by first and second walls 62, 64 and a cover 66, for example. The cover 66 is removably secured over the aft end 12b and encloses the second and third bearings 38, 40.

The fourth housing portion 16d, or turbine exhaust case, includes a radially rearward canted flange 58, which removably supports a hub 56 secured to the flange 58 by fasteners 60. The hub 56 includes first and second hub walls 68, 70 canted toward one another opposing direction and adjoining one another at an annular apex 71 provided near the flange 58. The first and second hub walls 68, 70 provide an integrated, unitary structure. Each of the first and second hub walls 68, 70 supports one of the second and third bearings 38, 40. The aft-canted low pressure turbine rotor hub 48 accommodates at least the second bearing 38 and a portion of the first hub wall 68 is arranged radially beneath the low pressure turbine section 24 such that axial length need not be added to the first spool 12. The second bearing 38 is arranged axially forward of an aft side 80 of a last rotor stage 78.

The engine 10 is assembled by arranging the first spool 12 within the second spool 14. The second and third bearings 38, 40 are mounted on the aft end 12b and the housing 16. In the example shown in Figures 1 and 4, the second and third bearings 38, 40 are arranged aft of the low pressure turbine section 24, and the first and second bearings 38, 40 are arranged in a common bearing compartment 54.

Although example embodiments have been disclosed, a worker of ordinary skill in this art would recognize that certain modifications would come within the scope of the claims. For that reason, the following claims should be studied to determine their true scope and content.

## Claims

1. A gas turbine engine (10; 100; 200) comprising:
a housing (16);
first and second spools (12, 14) coaxial with one another and arranged within the housing (16), the first spool (12) arranged within the second spool (14) and extending between forward and aft ends (12a, 12b), the aft end (12b) extending axially beyond the second spool (14); and
first and second bearings (38, 40) supporting the aft end (12b) of the first spool (12) relative to the housing (16);
a combustor section (30) and high and low pressure turbine sections (28, 24) downstream from the combustor section (30), the high pressure turbine section (28) mounted on the second spool (14), and the low pressure turbine section (24) mounted on the first spool (12), wherein the housing (16) includes a first housing portion (16c) arranged axially between high and low pressure turbine sections (28, 24), and a second housing portion (16d) arranged aft of the low pressure turbine sections (24);
wherein the first and second bearings (38, 40) are supported by the second housing portion (16d);
**characterised in that**
the second housing portion (16d) includes a hub (56) removably secured to an annular flange (58), the first and second bearings (38, 40) mounted to the hub (56),
the low pressure turbine section (24) includes a turbine rotor, and the first bearing (38) is arranged axially forward of an aft side (80) of a last rotor stage (78) of the low pressure turbine section (24), wherein the turbine rotor is inclined radially outward and aftward, and the hub (56) includes first and second hub walls (68, 70) respectively supporting the first and second bearings (38, 40), the first and second hub walls (68, 70) inclined radially outward and toward one another to provide an annular apex (71), a portion of the first hub wall (68) arranged radially beneath the low pressure turbine section (24), and the first and second hub walls (68, 70) providing an integrated, unitary structure.

2. The gas turbine engine according to claim 1, wherein the housing (16) is rotationally fixed, the first and second bearings (38, 40) each having first and second radial sides (72), the first radial side supported by the housing (16), and the second radial side (74) supporting the aft end (12b).

3. The gas turbine engine according to any preceding claim, comprising a bearing compartment (54), the first and second bearings (38, 40) arranged in the bearing compartment (54).

4. The gas turbine engine according to claim 3, wherein the bearing compartment (54) includes a cover (66) removably secured over the aft end (12b) and enclosing the first and second bearings (38, 40).

5. The gas turbine engine according to claim 1, comprising:
a fan (20);
a compressor section (22, 26) fluidly connected to the fan (20), the compressor section (22, 26) comprising a high pressure compressor portion (26) and a low pressure compressor portion (22);
the combustor section (30) fluidly connected to the compressor section (22, 26);
a turbine section (24, 28) fluidly connected to the combustor section (30), the turbine section (24, 28) comprising:
the high pressure turbine section (28) coupled to the high pressure compressor portion (26) via the second spool (14), and the low pressure turbine section (24); and
the second housing portion (16d) being a turbine exhaust case.

6. The gas turbine engine according to claim 5, wherein the low pressure turbine section (24) has a pressure ratio that is greater than 5.

7. A method of assembling the gas turbine engine of any preceding claim comprising:
arranging the first spool (12) within the second spool (14); and
mounting the first and second bearings (38, 40) between the aft end (12b) of the first spool (12) and the fixed housing (16).

8. The method according to claim 7, wherein the mounting step includes arranging the first and second bearings (38, 40) aft of the low pressure turbine section (24) mounted on the first spool (12).

9. The method according to claim 7 or 8, wherein the mounting step includes arranging the first and second bearings (38, 40) in a/the common bearing compartment (54).

10. The gas turbine engine or method of any preceding claim, wherein the gas turbine engine (10; 100; 200) is a high bypass geared aircraft engine having a bypass ratio of greater than about six (6:1).

11. The gas turbine engine or method of any preceding claim, wherein the gas turbine engine (10; 100; 200) includes a low Fan Pressure Ratio of less than about 1.45.

## Patentansprüche

1. Gasturbinentriebwerk (10; 100; 200), das Folgendes umfasst:
ein Gehäuse (16);
eine erste und eine zweite Spule (12, 14), die koaxial zueinander und innerhalb des Gehäuses (16) angeordnet sind, wobei die erste Spule (12) innerhalb der zweiten Spule (14) angeordnet ist und sich zwischen einem vorderen und einem hinteren Ende (12a, 12b) erstreckt, wobei sich das hintere Ende (12b) axial über die zweite Spule (14) erstreckt; und
ein erstes und ein zweites Lager (38, 40), die das hintere Ende (12b) der ersten Spule (12) relativ zu dem Gehäuse (16) stützen;
einen Brennkammerabschnitt (30) und einen Hoch- und einen Niederdruckturbinenabschnitt (28, 24) stromabwärts von dem Brennkammerabschnitt (30), wobei der Hochdruckturbinenabschnitt (28) auf der zweiten Spule (14) montiert ist, und wobei der Niederdruckturbinenabschnitt (24) auf der ersten Spule (12) montiert ist, wobei das Gehäuse (16) einen ersten Gehäuseabschnitt (16c), der axial zwischen dem Hoch- und dem Niederdruckturbinenabschnitt (28, 24) angeordnet ist, und einen zweiten Gehäuseabschnitt (16d) beinhaltet, der hinter dem Niederdruckturbinenabschnitt (24) angeordnet ist;
wobei das erste und das zweite Lager (38, 40) durch den zweiten Gehäuseabschnitt (16d) gestützt werden;
**dadurch gekennzeichnet, dass**
der zweite Gehäuseabschnitt (16d) eine Nabe (56) beinhaltet, die abnehmbar an einem ringförmigen Flansch (58) befestigt ist, wobei das erste und das zweite Lager (38, 40) auf die Nabe (56) montiert sind,
der Niederdruckturbinenabschnitt (24) einen Turbinenrotor beinhaltet, und das erste Lager (38) axial vorwärts von einer hinteren Seite (80) einer letzten Rotorstufe (78) des Niederdruckturbinenabschnitts (24) angeordnet ist, wobei der Turbinenrotor radial nach außen und nach hinten geneigt ist, und die Nabe (56) eine erste und eine zweite Nabenwand (68, 70) beinhaltet, die das erste bzw. das zweite Lager (38, 40) stützen, wobei die erste und die zweite Nabenwand (68, 70) radial nach außen und zueinander geneigt sind, um einen ringförmigen Scheitel (71) bereitzustellen, wobei ein Abschnitt der ersten Nabenwand (68) radial unterhalb des Niederdruckturbinenabschnitts (24) angeordnet ist, und wobei die erste und die zweite Nabenwand (68, 70) eine integrierte, einheitliche Struktur bereitstellen.

2. Gasturbinentriebwerk nach Anspruch 1, wobei das Gehäuse (16) drehfest ist, wobei das erste und das zweite Lager (38, 40) jeweils eine erste und eine zweite Radialseite (72) aufweisen, wobei die erste Radialseite durch das Gehäuse (16) gestützt wird, und wobei die zweite Radialseite (74) das hintere Ende (12b) stützt.

3. Gasturbinentriebwerk nach einem der vorhergehenden Ansprüche, das eine Lagerkammer (54) umfasst, wobei das erste und das zweite Lager (38, 40) in der Lagerkammer (54) angeordnet sind.

4. Gasturbinentriebwerk nach Anspruch 3, wobei die Lagerkammer (54) eine Abdeckung (66) beinhaltet, die abnehmbar über dem hinteren Ende (12b) befestigt ist und das erste und das zweite Lager (38, 40) einschließt.

5. Gasturbinentriebwerk nach Anspruch 1, das Folgendes umfasst:
ein Gebläse (20);
einen Verdichterabschnitt (22, 26) in Fluidverbindung mit dem Gebläse (20), wobei der Verdichterabschnitt (22, 26) einen Hochdruckverdichterabschnitt (26) und einen Niederdruckverdichterabschnitt (22) umfasst;
den Brennkammerabschnitt (30) in Fluidverbindung mit dem Verdichterabschnitt (22, 26);
einen Turbinenabschnitt (24, 28) in Fluidverbindung mit dem Brennkammerabschnitt (30), wobei der Turbinenabschnitt (24, 28) Folgendes umfasst:
den Hochdruckturbinenabschnitt (28), der über die zweite Spule (14) an den Hochdruckverdichterabschnitt (26) gekoppelt ist, und den Niederdruckturbinenabschnitt (24); und
den zweiten Gehäuseabschnitt (16d), der ein Turbinenabgaskasten ist.

6. Gasturbinentriebwerk nach Anspruch 5, wobei der Niederdruckturbinenabschnitt (24) ein Druckverhältnis aufweist, das größer ist als 5.

7. Verfahren zum Zusammensetzen des Gasturbinentriebwerks nach einem der vorhergehenden Ansprüche, das Folgendes umfasst:
Anordnen der ersten Spule (12) innerhalb der zweiten Spule (14); und
Montieren des ersten und des zweiten Lagers (38, 40) zwischen dem hinteren Ende (12b) der ersten Spule (12) und dem festen Gehäuse (16).

8. Verfahren nach Anspruch 7, wobei der Schritt des Montierens das Anordnen des ersten und des zweiten Lagers (38, 40) hinter dem Niederdruckturbinenabschnitt (24) beinhaltet, der auf die erste Spule (12) montiert ist.

9. Verfahren nach Anspruch 7 oder 8, wobei der Schritt des Montierens das Anordnen des ersten und des zweiten Lagers (38, 40) in eine/die gemeinsame Lagerkammer (54) beinhaltet.

10. Gasturbinentriebwerk oder Verfahren nach einem der vorhergehenden Ansprüche, wobei das Gasturbinentriebwerk (10; 100; 200) ein Luftfahrzeugtriebwerk mit hohem Bypass-Getriebe ist, das ein Bypass-Verhältnis von mehr als ungefähr 6 (6:1) aufweist.

11. Gasturbinentriebwerk oder Verfahren nach einem der vorhergehenden Ansprüche, wobei das Gasturbinentriebwerk (10; 100; 200) ein niedriges Gebläsedruckverhältnis von weniger als ungefähr 1,45 beinhaltet.

## Revendications

1. Moteur à turbine à gaz (10 ; 100 ; 200), comprenant :
un carter (16) ;
des première et seconde bobines (12, 14) coaxiales l'une par rapport à l'autre et disposées à l'intérieur du carter (16), la première bobine (12) étant disposée à l'intérieur de la seconde bobine (14) et s'étendant entre les extrémités avant et arrière (12a, 12b), l'extrémité arrière (12b) s'étendant axialement au-delà de la seconde bobine (14) ; et
des premier et second paliers (38, 40) supportant l'extrémité arrière (12b) de la première bobine (12) par rapport au carter (16) ;
une section de chambre de combustion (30) et des sections de turbine haute et basse pression (28, 24) en aval de la section de chambre de combustion (30), la section de turbine haute pression (28) étant montée sur la seconde bobine (14) et la section de turbine basse pression (24) étant montée sur la première bobine (12), dans lequel le carter (16) comprend une première partie de carter (16c) disposée axialement entre les sections de turbine haute et basse pression (28, 24), et une seconde partie de carter (16d) disposée à l'arrière des sections de turbine basse pression (24) ;
dans lequel les premier et second paliers (38, 40) sont supportés par la seconde partie de carter (16d) ;
**caractérisé en ce que**
la seconde partie de carter (16d) comprend un moyeu (56) fixé de manière amovible à une bride annulaire (58), les premier et second paliers (38, 40) étant montés sur le moyeu (56),
la section de turbine basse pression (24) comprend un rotor de turbine, et le premier palier (38) est disposé axialement en avant d'un côté arrière (80) d'un dernier étage de rotor (78) de la section de turbine basse pression (24), dans lequel le rotor de turbine est incliné radialement vers l'extérieur et vers l'arrière, et le moyeu (56) comprend des première et seconde parois de moyeu (68, 70) supportant respectivement les premier et second paliers (38, 40), les première et seconde parois de moyeu (68, 70) étant inclinées radialement vers l'extérieur et l'une vers l'autre pour fournir un sommet annulaire (71), une partie de la première paroi de moyeu (68) étant disposée radialement sous la section de turbine basse pression (24) et les première et seconde parois de moyeu (68, 70) fournissant une structure intégrée et unitaire.

2. Moteur à turbine à gaz selon la revendication 1, dans lequel le carter (16) est fixe en rotation, les premier et second paliers (38, 40) ayant chacun des premier et second côtés radiaux (72), le premier côté radial étant supporté par le carter (16) et le second côté radial (74) supportant l'extrémité arrière (12b).

3. Moteur à turbine à gaz selon une quelconque revendication précédente, comprenant un compartiment de palier (54), les premier et second paliers (38, 40) étant disposés dans le compartiment de palier (54).

4. Moteur à turbine à gaz selon la revendication 3, dans lequel le compartiment de palier (54) comprend un couvercle (66) fixé de manière amovible sur l'extrémité arrière (12b) et enfermant les premier et second paliers (38, 40).

5. Moteur à turbine à gaz selon la revendication 1, comprenant :
une soufflante (20) ;
une section de compresseur (22, 26) reliée fluidiquement à la soufflante (20), la section de compresseur (22, 26) comprenant une partie de compresseur haute pression (26) et une partie de compresseur basse pression (22) ;
la section de chambre de combustion (30) reliée fluidiquement à la section de compresseur (22, 26) ;
une section de turbine (24, 28) reliée fluidiquement à la section de chambre de combustion (30), la section de turbine (24, 28) comprenant :
la section de turbine haute pression (28) couplée à la partie de compresseur haute pression (26) par l'intermédiaire de la seconde bobine (14), et la section de turbine basse pression (24) ;
et la seconde partie de carter (16d) étant un carter d'échappement de turbine.

6. Moteur à turbine à gaz selon la revendication 5, dans lequel la section de turbine basse pression (24) a un rapport de pression supérieur à 5.

7. Procédé d'assemblage du moteur à turbine à gaz selon une quelconque revendication précédente, comprenant :
la disposition de la première bobine (12) à l'intérieur de la seconde bobine (14) ; et
le montage des premier et second paliers (38, 40) entre l'extrémité arrière (12b) de la première bobine (12) et le carter fixe (16).

8. Procédé selon la revendication 7, dans lequel l'étape de montage comprend la disposition des premier et second paliers (38, 40) à l'arrière de la section de turbine basse pression (24) montée sur la première bobine (12).

9. Procédé selon la revendication 7 ou 8, dans lequel l'étape de montage comprend la disposition des premier et second paliers (38, 40) dans un/le compartiment de palier commun (54).

10. Moteur à turbine à gaz ou procédé selon une quelconque revendication précédente, dans lequel le moteur à turbine à gaz (10 ; 100 ; 200) est un moteur d'aéronef à engrenages à dérivation élevée ayant un rapport de dérivation supérieur à environ six (6:1).

11. Moteur à turbine à gaz ou procédé selon une quelconque revendication précédente, dans lequel le moteur à turbine à gaz (10 ; 100 ; 200) comprend un faible rapport de pression de soufflante inférieur à environ 1,45.
